Europäisches Patentamt

European Patent Office

Office européen des brevets

(11) Publication number: **0 028 477**
A1

(12) # EUROPEAN PATENT APPLICATION

(21) Application number: 80303700.1

(22) Date of filing: 20.10.80

(51) Int. Cl.³: **F 02 K 9/08**
**F 02 K 9/32**

(30) Priority: 31.10.79 GB 7937621

(43) Date of publication of application:
13.05.81 Bulletin 81/19

(84) Designated Contracting States:
DE FR IT SE

(71) Applicant: WALLOP INDUSTRIES LTD
Middle Wallop
Stockbridge Hampshire, SO20 8DX(GB)

(72) Inventor: Minns, Stephen Andrew
73 Rampart Road
Salisbury Wiltshire(GB)

(72) Inventor: Levell, Brian
High Street
Shipton Bellinger Hampshire(GB)

(74) Representative: Smith, Martin Stanley et al,
Stevens, Hewlett & Perkins 5, Quality Court Chancery
Lane
London WC2A 1HZ(GB)

(54) A rocket motor.

(57) A rocket motor is disclosed having an annular jet nozzle (102), via which efflux gas leaves a combustion chamber (101). The annular nozzle is defined between a back plate (104) and a casing (106). The casing (106) and back plate (104) are interconnected by pillars (133) around which propellant charges (132) are mounted. Shims (130) control the concentricity of the back plate (104) and the casing (106). Fins (131), against which efflux gas from the nozzle impinges, spin the rocket motor in flight.

FIG. 2

## "A ROCKET MOTOR"

The present invention relates to a rocket motor.

Rocket motors using solid propellant charges generally have one or more jet nozzles of circular cross-section.

A rocket motor according to the invention comprises a combustion chamber for a solid propellant charge having an annular jet nozzle.

Preferably the nozzle is defined between a surface of revolution on an inner member and a surface of revolution on an outer member, which members are fixed in the rocket motor.

Whilst it is envisaged that the inner member and the outer member may be annular members attached to the walls of the combustion chamber, it is preferred that the inner and outer members be integral with the walls. In the motor described in greater detail below, the outer member is a casing extending integrally along the side-walls of the combustion chamber and over one end-wall thereof; whilst the inner member is a back plate extending over the other end-wall of the combustion chamber.

Whilst it is not essential that the surfaces of revolution be precisely concentric, the rocket motor produces a more even thrust if this is so. Accordingly means may be provided for controlling the concentricity of the said surfaces on the inner and outer members in addition to the means whereby the members are fixed. Spacers may be employed for this control. Shim or wire spacers may be used in the annular jet nozzle, either being left permanently in the nozzle or being removed before use of the rocket motor. Alternatively spacers may be fitted between the inner and outer members upstream or downstream of the nozzle.

Further, means may be provided for spinning the rocket motor by giving at least some of the propellant efflux gas a tangential component of velocity with respect to the annular jet nozzle. Slits may be provided in the said surface of the inner or of the outer member. Alternatively fins may be provided upstream of, downstream of or indeed in the annular nozzle. The fins may also serve to control the concentricity of the said surfaces.

Preferably the said surfaces are contoured to give the jet nozzle a cross-section which converges and then diverges in the direction of efflux gas flow therethrough.

To help understanding of the invention, two rocket motors in accordance with the invention will now be described with reference to the accompanying drawings in which:-

Figure 1 is a central longitudinal cross-sectional view of one rocket motor;

Figure 2 is a similar view of another rocket motor; and

Figure 3 is a cross-sectional end view on the line III-III in Figure 2.

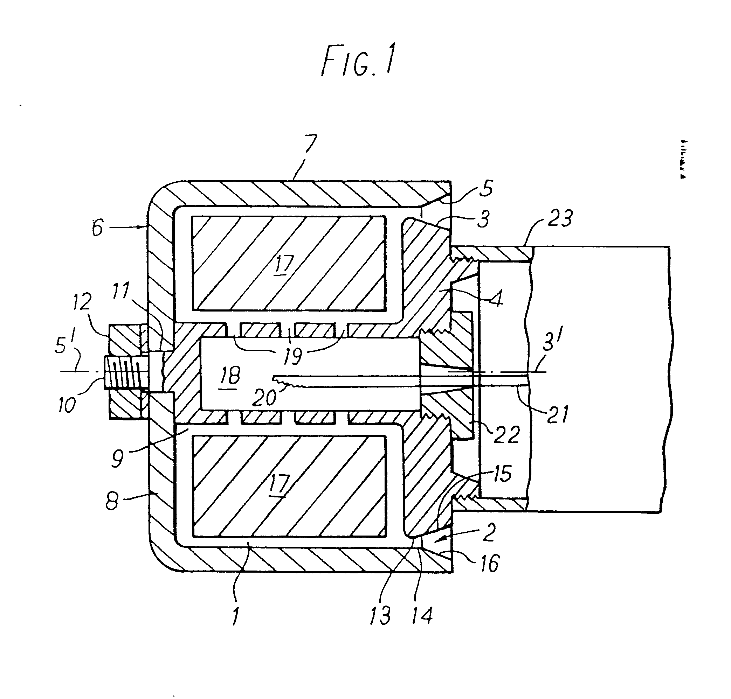

The rocket motor of Figure 1 has a combustion chamber 1 having an annular jet nozzle 2 formed between a surface 3 on a back plate 4 and a surface 5 on a casing 6. The surface 3 is a surface of revolution about the axis 3' and the surface 5 is a surface of revolution about the axis 5'. The casing 6 is pot shaped with a cylindrical side wall 7 and an end wall 8 enclosing the combustion chamber of which the back plate 4 forms the other end wall.

A pillar 9 formed integrally with the back plate 4 has a spigot 10 which locates in a bore 11 in the end wall 8.    The casing 6 is held fast to the
pillar by a nut 12 on a screwed end of the spigot.    Thus
the surfaces 3, 5 are fixed with respect to each other
to define annular jet nozzle 2, the axes 3', 5' being
maintained coincident.    A convergent-divergent shape
is given to the nozzle by the contour of the surfaces
3, 5.    At the entry to the nozzle the inner rim 13 of
the back plate has a rounded surface, which in cooperation with a cylindrical surface portion 14 of the
casing defines the convergent entry to the nozzle.
Outer portions 15, 16 of the surfaces 3, 5 taper to give
the divergent exit from the nozzle.

A ring 17 of solid propellant is fitted around
the pillar 9.    Ignition of the propellant is effected
by an ignition charge 18 housed within the pillar, the
hollow interior of which communicates with the combustion chamber 1 via drillings 19.    The ignition charge
is ignited electrically by a fuse 20 whose wires 21 pass
out of the rocket motor via a plug 22.

The rocket motor is screwedly attached to a pay
load 23 which it tows.

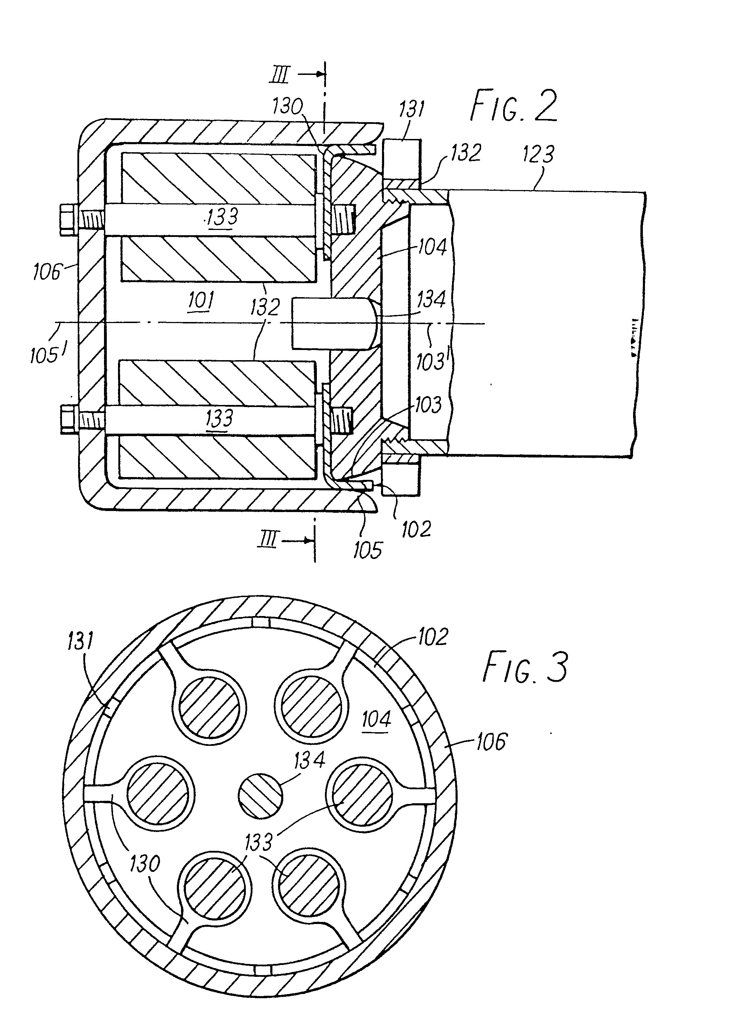

Referring now to Figure 2, the rocket motor
shown therein has a casing 106 and a back plate 104
which are substantially identical to the corresponding
parts in the rocket motor of Figure 1.    In particular
the surfaces 103 and 105 are identical to the corresponding surfaces 3, 5 and they define an identical
annular jet nozzle 102.

By contrast with Figure 1, six shims 130 are
spaced at regular intervals around the annular nozzle
102 to control the concentricity of the surfaces 103,
105 and thereby control the width of nozzle.    A further
difference from the Figure 1 rocket motor is the pro-
vision of fins 131 mounted via an integral ring 132
on the forward end of the payload 123.    The fins are positioned for the efflux gas to impinge on them after leaving the nozzle and thereby spin the rocket to stabilize it in flight.

The propellant charge differs from that of Figure 1 in being six separate charges 132 mounted on six pillars 133 which interconnect the casing 106 and the backplate 104. The pillars 133 are screwed into the backplate 104 thereby holding the shims 130 in place. A percussion cap 134 is provided for ignition of the propellant.

The rocket motors of Figures 1 and 2 have particular advantage for towing a pay load. This comes in part from the fact that the pay load may be accommodated within the annular efflux gas stream and in part since they produce an even thrust around the jet nozzle and consequently tow the pay load in a straight flight. This contrasts with a prior rocket towing rocket motor which in effect consisted of two separate rocket motors positioned one on either side of the pay load. Due to imbalance between the two motors straight flight could not be reliably predicted. However rocket motors according to the invention are not intended purely for towing but may also be used for pushing pay loads.

Another advantage of the rocket motors of Figures 1 and 2 is that the narrowest portion of the convergent-divergent nozzle is very narrow and thus a considerable expansion ratio, resulting in an efficient motor, can be provided in the divergent portion of the nozzle without excessively lengthening the nozzle. By contrast a single circular cross-section nozzle having the same area at its narrowest portion would have a long nozzle were it to have the same expansion ratio.

Further the considerable surface area of the circular surfaces makes the jet nozzle resistant to erosion. In addition the jet nozzle may be readily formed by simple machine operations.

Claims

1.        A solid-propellant rocket motor
having an annular jet nozzle for propellant efflux gas.

2.        A rocket motor as claimed in claim 1 wherein
the annular jet nozzle has a convergent-divergent cross-
section and the nozzle is defined between a surface of
revolution on an inner member and a surface of
revolution on an outer member, the said members being
fixed in the rocket motor.

3.        A rocket motor as claimed in claim 2 wherein
the rocket motor has a combustion chamber defined by a
pot shaped casing providing one end wall of the
chamber and sidewalls of the chamber and a back plate
providing the other end wall of the chamber.

4.        A rocket motor as claimed in claim 3 wherein
the said outer member is the said casing and the said
inner member is the said back plate.

5.        A rocket motor as claimed in claim 3 wherein
the said outer member is annular and is attached to
the said casing and the said inner member is annular
and is attached to the said back plate.

6.        A rocket motor as claimed in claim 4 or
claim 5 wherein the back plate is attached to the
casing by a hollow central pillar, the pillar having
an igniter housed therein and a solid propellant
charge disposed thereabout.

7.        A rocket motor as claimed in claim 4 or
claim 5 wherein the back plate is attached to the
casing by a plurality of pillars, each pillar having an individual propellant charge disposed thereabout, and the back plate carrying an igniter.

8.      A rocket motor as claimed in any one of claims 2 to 7 wherein means is provided for controlling the concentricity of the said surfaces on the inner and outer members.

9.      A rocket motor as claimed in claim 8 . wherein the concentricity controlling means comprises shim or wire spacers in the nozzle.

10.      A rocket motor as claimed in claim 8 wherein the concentricity controlling means comprises spacers fitted between the outer and inner members adjacent the nozzle.

11.      A rocket motor as claimed in any preceding claims wherein means is provided for spinning the rocket motor by giving at least some of the propellant efflux gas a tangential component of velocity with respect to the annular jet nozzle.

12.      A rocket motor as claimed in claim 11 as appendant to any one of claims 2 to 10 wherein the spinning means comprises slits in the said surface of the said inner or of the said outer member.

13.      A rocket motor as claimed in claim 11 wherein the spinning means comprises fins arranged in or adjacent the annular jet nozzle.

14.      A rocket motor as claimed in claim 13 as appendant to claim 10 wherein the said fins serve as the said spacers.

FIG.1

FIG. 2

FIG. 3

## EUROPEAN SEARCH REPORT

European Patent Office

Application number

EP 80 30 3700.1

### DOCUMENTS CONSIDERED TO·BE RELEVANT

| Category | Citation of document with indication, where appropriate, of relevant passages | Relevant to claim |
|---|---|---|
| X | CH - A - 373 922 (BÖLKOW-ENTWICKLUNGEN KG et al.) <br> * page 1, lines 18 to 25; fig. 3 * <br> -- | 1-3 |
| X | DE - B - 1 191 178 (BENDIX CORP.) <br> * column 4, lines 12 to 65; <br> fig. 1, 5 * <br> -- | 1-5 |
| | FR - A - 1 417 968 (INSTITUT FRANÇAIS DU PETROLE, DES CARBURANTS ET LUBRIFIANTS) <br> * claim; fig., positions 4, 5 * <br> -- | 1-3, 8 |
| | DE - C - 570 511 (H. OBERTH) <br> * page 2, line 73 to page 3, line 20; fig. 1 * <br> -- | 1-3 |
| | US - A - 3 618 860 (A.R. PARILLA et al.) <br> * abstract; fig. 2,3 * <br> -- | 2 |
| | DE - C - 977 590 (KUNSTSTOFFTECHNISCHE STUDIENGESELLSCHAFT MBH) <br> * page 2, line 92 to page 3, line 4; fig. 1, positions 6, 29 * <br> -- | 1-7 |
| A | US - A - 3 049 876 (J.F. CONNORS) <br> * column 1, lines 37 to 57 * <br> ---- | |

**CLASSIFICATION OF THE APPLICATION (Int. Cl.³)**

F 02 K  9/08
F 02 K  9/32

**TECHNICAL FIELDS SEARCHED (Int. Cl.³)**

F 02 K  9/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 26-01-1981 | STÖCKLE |

EPO Form 1503.1  06.78